# EUROPÄISCHE PATENTANMELDUNG

(11) **EP 1 757 664 A2**
(43) Veröffentlichungstag der Anmeldung: **28.02.2007**
(21) Anmeldenummer: 06118230.9
(22) Anmeldetag: 01.08.2006
(51) Int. Cl.: C09D 17/00

(54) **Paste aus nanoskaligem Pulver und Dispergiermittel**

(30) Priorität: 25.08.2005 DE 102005040157
(71) Anmelder: Degussa AG, 40474 Düsseldorf (DE)
(72) Erfinder: Hill, Sven Dr., 63741, Aschaffenburg (DE); Lehmann, Kathrin, 51377, Leverkusen (DE); Cavaleiro, Pedro Dr., 41749, Viersen (DE); Heberer, Stefan, 63571, Gelnhausen-Meerholz (DE); Pridöhl, Markus Dr., 63538, Großkrotzenburg (DE)

(57) **Zusammenfassung**

Paste enthaltend als feste Phase wenigstens ein nanoskaliges Pulver und als flüssige Phase wenigstens ein Dispergiermittel, wobei
- der Anteil des nanoskaligen Pulvers 30 bis 95 Gew.-% und der Anteil der flüssigen Phase wenigstens 5 Gew.-% ist, jeweils bezogen auf die Gesamtmenge der Paste,
- die Paste einen Wassergehalt von weniger als 3 Gew.-% Wasser aufweist und
- die flüssige Phase einen VOC-Gehalt von weniger als 10 g/l aufweist.

## Beschreibung

Die Erfindung betrifft eine Paste, enthaltend nanoskalige Pulver als feste Phase und ein Dispergiermittel als flüssige Phase.

Pigmentpasten bestehen üblicherweise aus Wasser und/oder einem organischen Lösemittel, mindestens einem Pigment, mindestens einem Bindemittel sowie gegebenenfalls weiteren organischen Lösemitteln, Netzmitteln und anderen für Pigmentpasten üblichen Zusätzen (vgl. Volker Radke in "Pigmente für Anstrichmittel", Technische Akademie Esslingen, Kap. 7, Dispergierung von Pigmenten, Export-Verlag, 1990).

Weiterhin sind auch bindemittelfreie Pastensysteme bekannt, die aus Wasser und/oder einem organischen Lösemittel, mindestens einem Pigment, mindestens einem Dispergiermittel, sowie gegebenenfalls weiteren organischen Lösemitteln, Netzmitteln und anderen für Pigmentpasten üblichen Zusätzen bestehen.

Damit die Pigmentpasten möglichst universell einsetzbar sind und so die kostengünstige Herstellung einer Vielzahl zum Teil recht unterschiedlicher Beschichtungen, Farben und/oder Lacken ermöglichen, sollten diese Pigmentpasten möglichst hohe Füllgrade aufweisen und mit möglichst vielen Beschichtungs-, Farben- und Lacksystemen verträglich sein.

Die genannten Anforderungen führen in der Regel zu einer Vielzahl von Problemen, wie beispielsweise einer hohen Viskosität der Pigmentpasten, einer unzureichenden Lagerstabilität der Pigmentpasten (gewünscht ist in der Regel eine Lagerstabilität der Pigmentpasten von mindestens 6 Monaten bei Lagerung bei Raumtemperatur oder von 1 Monat bei Lagerung bei 40°C) oder einer schlechten Dispergierbarkeit (d.h. es ist ein hoher spezifischer Energieeintrag zur Dispergierung erforderlich oder es tritt Eindicken der Pigmentpaste während des Dispergiervorgangs ein oder es besteht eine Absetzneigung).

Wie oben ausgeführt, enthalten Pigmentpasten, die dem Stand der Technik entsprechen, entweder Wasser oder organische Lösemittel, um die Viskosität der Pigmentpasten möglichst niedrig zu halten und doch hohe Füllgrade zu realisieren.

Jedoch schränken insbesondere Wasser und/oder organische Lösemittel die universelle Verwendbarkeit von Pigmentpasten deutlich ein.

Wasser kann in organischen, unpolaren Lacksystemen zu Trübungen und Störungen führen. In reaktiven, zweikomponentigen isocyanatvernetzenden Lacksystemen führt Wasser oft zu unerwünschten Nebenreaktionen, wie Blasen- oder Schaumbildung.

Umgekehrt können organische Lösemittel in wässrigen Farben- und Lacksystemen zu Unverträglichkeiten führen. Insbesondere niedermolekulare, leichtflüchtige Verbindungen sind als Lösemittel für Pastensysteme nur eingeschränkt geeignet, da sie die Umwelt durch Gerüche und/oder flüchtige Lösungsmittelbestandteile (VOC "volatile organic compounds") belasten und die Gefahr der Bildung von explosiven Gasgemischen in sich bergen.

Man ist bestrebt den VOC Gehalt in allen Beschichtungs-, Farben- und Lacksystemen weiter zu reduzieren (vgl. "Chemikalienrechtliche Verordnung zur Begrenzung der Emissionen flüchtiger organischer Verbindungen (VOC) durch Beschränkung des Inverkehrbringens lösemittelhaltiger Farben und Lacke (Lösemittelhaltige Farben- und Lack-Verordnung - ChemVOCFarbV)" und "31. BImSchV - Verordnung zur Begrenzung der Emissionen flüchtiger organischer Verbindungen bei der Verwendung organischer Lösemittel in bestimmten Anlagen").

Es besteht somit ein wachsender Bedarf an Pastensystemen, die gegenüber dem Stand der Technik weiter verbesserte Eigenschaften zeigen. Insbesondere besteht großes Interesse an Pastensystemen, die in einer großen Bandbreite von Anwendungen, wie beispielsweise Beschichtungen, Farben, Druckfarben, Klebstoffe einsetzbar sind. In all diesen Anwendungen sollen die Eigenschaften der Paste, beispielsweise beim Einarbeiten der Paste in ein Lacksystem erhalten werden. So soll etwa eine Reagglomeration der in der Paste vorliegenden Partikel vermieden werden. Weiterhin soll die Paste so beschaffen sein, dass die Belastung der Umwelt durch flüchtige organische Bestandteile (VOC) reduziert oder ganz vermieden wird, dass sie hohe Füllgrade aufweist und eine hinreichende Lagerstabilität zeigt.

### Definitionen

Unter Paste im Sinne der Erfindung ist ein fest/flüssig-System zu verstehen, welches wenigstens ein nanoskaliges Pulver und wenigstens ein Dispergiermittel, jedoch kein Lösungsmittel enthält oder nur in solchen Mengen, dass der VOC-Gehalt der Paste kleiner als 1 Gew.-% ist.

Unter Dispergiermittel sind Mittel zu verstehen, welche das Dispergieren von Partikeln in einem Dispersionsmittel, der flüssigen Phase einer Dispersion, durch Herabsetzen der Grenzflächenspannung erleichtern. Die Eigenschaft des Dispergiermittels durch Herabsetzen der Grenzflächenspannung zwischen der festen und flüssigen Phase das Dispergieren der Partikel zu erleichtern zeigt sich, wenn die erfindungsgemäße Paste in einem nachfolgenden Schritt mit einer wässerigen oder organischen Flüssigkeit, in eine Dispersion überführt wird. Die Dispergiermittel unterstützen das Aufbrechen von Agglomeraten, benetzen bzw. belegen als oberflächenaktive Materialien die Oberfläche der zu dispergierenden Partikel und stabilisieren diese gegen eine unerwünschte Reagglomeration.

Unter Dispersion im Sinne der Erfindung ist ein fest/flüssig-System zu verstehen, bei dem die feste Phase ein nanoskaliges Pulver enthält und die flüssige Phase wenigstens ein Dispergiermittel und wenigstens ein Lösungsmittel enthält. Je nach Wahl des Lösungsmittels kann der VOC-Gehalt der Dispersion größer oder kleiner als 1 Gew.-% sein. Das Lösungsmittel kann Wasser, ein polares und/oder ein unpolares, organisches Lösungsmittel sein.

Unter flüchtiger organischer Verbindung (VOC) ist jede organische Verbindung zu verstehen, die bei 293,15 K einen Dampfdruck von 0,01 kPa oder mehr hat.

Unter organischer Verbindung ist jede Verbindung zu verstehen, die mindestens das Element Kohlenstoff und darüber hinaus Wasserstoff, Halogene, Sauerstoff, Schwefel, Phosphor, Silicium oder Stickstoff mit Ausnahme von Kohlenstoffdioxid und anorganischen Carbonaten und Bicarbonaten enthält.

Unter nanoskalig im Sinne der Erfindung sind Pulver mit einer mittleren Aggregat- oder Agglomeratgröße ≤ 1000 nm und/oder einer Primärpartikelgröße ≤ 100 nm zu verstehen.

Unter partikelgebundenem Wasser, ist Wasser zu verstehen, welches adsorptiv an die Partikeloberfläche gebunden ist. Der Gehalt kann durch geeignete Methoden reduziert werden.

Unter Gleichgewichtseinstellung ist die Verteilung des partikelgebundenen Wassers zwischen fester und flüssiger Phase der erfindungsgemäßen Paste zu verstehen.

Gegenstand der Erfindung ist eine Paste, enthaltend als feste Phase wenigstens ein nanoskaliges Pulver und als flüssige Phase wenigstens ein Dispergiermittel, wobei
- der Anteil des nanoskaligen Pulvers 30 bis 95 Gew.-% und der Anteil der flüssigen Phase wenigstens 5 Gew.-% ist, jeweils bezogen auf die Gesamtmenge der Paste,
- die Paste einen Wassergehalt von weniger als 3 Gew.-% Wasser aufweist und
- die flüssige Phase einen VOC-Gehalt von weniger als 10 g/l aufweist.

Der VOC-Gehalt der flüssigen Phase kann bevorzugt weniger als 1 g/l betragen.

Weiterhin kann es vorteilhaft sein, wenn die flüssige Phase der erfindungsgemäßen Paste einen Gehalt an Wasser von weniger als 0,1 Gew.-%, aufweist.

Weiterhin kann es vorteilhaft sein, wenn das nanoskalige Pulver der erfindungsgemäßen Paste maximal bis zu 3 Gew.-%, partikelgebundenes Wasser gemäß der Gleichgewichtseinstellung enthält.

Der Anteil des nanoskaligen Pulvers, bezogen auf die Gesamtmenge der Paste, ist bevorzugt 60 bis 90 Gew.-% und besonders bevorzugt 75 bis 85 Gew.-%.

Weiterhin ist das nanoskalige Pulver weitestgehend gleichmäßig in der Paste verteilt ist. Werden an verschiedenen Stellen einer Paste die Gehalte an nanoskaligem Pulver bestimmt, so differieren die gefundenen Werte in der Regel nicht mehr als ± 5% vom Mittelwert. Vorteilhafterweise differieren die Werte nicht mehr als ± 1%, wobei ein Bereich von ± 0,1 % besonders bevorzugt ist.

Der mittlere Durchmesser der nanoskaligen Partikel in der erfindungsgemäßen Paste kann bevorzugt kleiner als 300 nm und besonders bevorzugt kleiner als 200 nm sein.

Die Art und die Herkunft der in der erfindungsgemäßen Paste vorliegenden nanoskaligen Pulver ist nicht limitiert. Bevorzugt können jedoch nanoskalige Pulver in Form eines Metalles, eines Metalloxid, eines Metallborides, eines Metallcarbides, eines Metallcarbonates, eines Metallnitrides, eines Metallphosphates, eines Metallchalkogenides, ein Metallsulfates und/oder eines Metallhalogenides vorliegen.

Das Metall kann bevorzugt Li, Na, K, Rb, Cs, Be, Mg, Ca, Sr, Ba, Sc, Y, La, Ce, Pr, Nd, Sm, Eu, Gd, Tb, Ti, Zr, Hf, V, Nb, Ta, Cr, Mo, W, Mn, Fe, Co, Ni, Cu, Ag, Zn, Cd, Hg, B, Al, Ga, In, Te, Se, Tl, Si, Ge, Sn, Pb, P, As, Sb und/oder Bi sein. Im Sinne der Erfindung sollen auch die Nichtmetalle B, Si, und P miterfasst sein.

Insbesondere kann ein Metalloxid, welches die Elemente Si, Al, Ti, Fe, Ce, In, Sb, Sn, Zn, Y und/oder Zr enthält, bevorzugt sein. Besonders vorteilhaft kann es sein, wenn die erfindungsgemäße Paste Metallmischoxide wie Indiumzinnoxid, Antimonzinnoxid, Mischoxide mit Matrix-Domänenstruktur wie beispielsweise die in EP-A-1284485 oder in EP-A-1468962 beschrieben, enthalten.

Insbesondere kann die erfindungsgemäße Paste auch ein durch Fällung, wie beispielsweise in WO00/14017 beschrieben, hergestelltes Metalloxid enthalten.

Die erfindungsgemäße Paste kann weiterhin oberflächenmodifizierte nanoskalige Pulver, insbesondere Metalloxide, enthalten. Die Oberflächenmodifizierung umfasst Adsorption, Reaktionen an der Oberfläche oder Komplexierung von beziehungsweise mit anorganischen und/oder organischen Reagenzien. Die erfindungsgemäße Paste kann beispielsweise ein nanoskaliges Ceroxidpulver enthalten, dessen Oberfläche Carbonatgruppen trägt. Ein solches Pulver ist in der deutschen Patentanmeldung mit der Anmeldenummer 10 2005 038 136.7 und dem 12.08.2005 als Anmeldetag offenbart.

Die Oberflächenmodifizierung umfasst auch die Adsorption von bioorganischen Materialien, wie Nucleinsäuren oder Polysacchariden.

Die erfindungsgemäße Paste enthält neben dem nanoskaligen Pulver auch wenigstens ein Dispergiermittel.

Bevorzugterweise kann die erfindungsgemäße Paste ein Dispergiermittel enthalten, welches ein styrenoxidbasiertes Polyalkylenoxid mit statistischer Verteilung ist oder ein Blockcopolymer der allgemeinen Formel **1** ist,

R¹O(SO)ₐ(EO)_{b}(PO)_{c}(BO)_{d}R² (**1**),

wobei
R¹ = ein geradkettiger oder verzweigter oder cycloaliphatischer Rest mit 8 bis 13 Kohlenstoffatomen,
R² = Wasserstoff, ein Acylrest, Alkylrest oder Carbonsäurerest mit jeweils 1 bis 8 C-Atomen,
SO = Styrenoxid, EO = Ethylenoxid, PO = Propylenoxid,
BO = Butylenoxid und
a = 1 bis 5, b = 3 bis 50, c = 0 bis 3, d = 0 bis 3 sind, wobei b ≥ a+c+d ist.

Dispergiermittel mit a=1 bis 1,9 sind beispielsweise in EP-A-1078946 beschrieben.

Weiterhin kann die erfindungsgemäße Paste ein Dispergiermittel enthalten, welches ein Phosphorsäureester der allgemeinen Formel **2,** 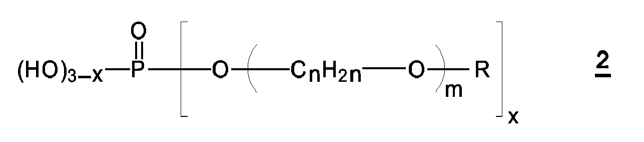 ist, mit R = 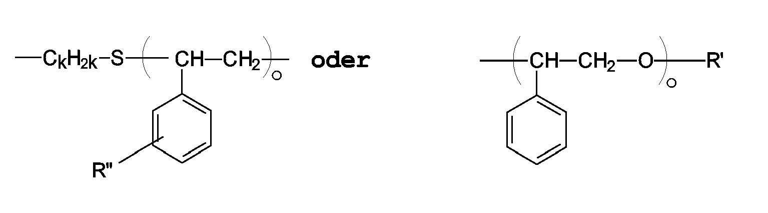 wobei
x gleich 1 oder 2,
n eine Zahl von 2 bis 18,
m und o eine Zahl von 2 bis 100,
k eine Zahl von 2 bis 4,
R" H oder ein linearer oder verzweigter Alkylrest, der gegebenenfalls mit zusätzlichen funktionellen Gruppen substituiert sein kann, und
R' einen Alkyl-, Alkaryl-, Alkenyl- oder Sulfopropylrest ist.

Bevorzugt ist R" = H. R' ist gewöhnlich abgeleitet von einem Alkohol R'OH, der als Startalkohol für die Polymerisation des Styroloxids und Alkylenoxids fungiert. Beispiele für die Reste R' sind der Methyl-, Butyl-, Stearyl-, Allyl-, Hexenyl-, Nonylphenyl- oder Oleylrest. Bevorzugt für R' sind Methyl- und Butylreste.
Solche Dispergiermittel sind beispielsweise in EP-A-940406 beschrieben.

Die terminale OH-Gruppen können auch anionisch modifiziert vorliegen, beispielsweise sulfatiert, sulfoniert, phosphoryliert (siehe allgemeine Formel **2**) oder auch carboxymodifiziert.

Weiterhin kann die erfindungsgemäße Paste ein Dispergiermittel enthalten, welches Blockcopolymere und deren Salze der allgemeinen Formel **2a,**

[R¹O(SO)ₐ(EO)_{b}(CH₂CHCH₃O)_{c}(BO)_{d}]ₓP (=O) (OH)₃₋ₓ **2a**

enthält, wobei R¹ = ein geradkettiger, verzweigter oder cycloaliphatischer Rest mit 1 bis 22 Kohlenstoffatomen, SO = Styroloxid, EO = Ethylenoxid, BO = Butylenoxid und a = 1 bis < 2, b = 0 bis 100, c = 0 bis 10, d = 0 bis 3 sind, wobei b ≥ a + c + d ist.

Weiterhin kann die erfindungsgemäße Paste ein Dispergiermittel enthalten, welches erhältlich ist durch die teilweise oder vollständige Umsetzung von
A) einem oder mehreren aminofunktionellen Polymeren mit
B) einem oder mehreren Polyestern der allgemeinen Formeln (**3**)/(**3a**)

   T-C(O)-[O-A-C(O)]ₓ-OH (**3**),

   T-O-[C(O)-A-O-]_{y}-Z ((**3a**)

   und
C) einem oder mehreren Polyethern der allgemeinen Formel (**4**)/(**4a**)

   T-C (O) -B-Z (**4**),

   T-O-B-Z (**4a**),

   worin
   T ein Wasserstoffrest und/oder ein gegebenenfalls substituierter, linearer oder verzweigter Aryl-,
   Arylalkyl-, Alkyl- oder Alkenylrest mit 1 bis 24 Kohlenstoffatomen ist,
   A mindestens ein zweiwertiger Rest ist, ausgesucht aus der Gruppe der linearen, verzweigten, cyclischen und aromatischen Kohlenwasserstoffe,
   Z mindestens ein Rest ist, ausgesucht aus der Gruppe der Sulfonsäuren, Schwefelsäuren, Phosphonsäuren,
   Phosphorsäuren, Carbonsäuren, Isocyanate, Epoxide, insbesondere der Phosphorsäure und (Meth)acrylsäure,
   B ein Rest der allgemeinen Formel (**5**) ist

   -(C₁H₂₁O)ₐ-(CₘH₂ₘO)_{b}-(CₙH₂ₙO)_{c}-(SO)_{d}- (**5**)

   a,b,c unabhängig voneinander Werte von 0 bis 100 sind, mit der Maßgabe, dass die Summe aus a + b + c ≥ 0, vorzugsweise 5 bis 35, insbesondere 10 bis 20 ist, mit der Maßgabe, dass die Summe aus a + b + c + d > 0,
   d≥ 0, vorzugsweise 1 bis 5 ist,
   l,m,n unabhängig voneinander ≥ 2, vorzugsweise 2 bis 4 ist,
   x,y unabhängig voneinander ≥ 2 sind.

Die Reaktionsprodukte können in Form der Amide und/oder der entsprechenden Salze vorliegen. Weist der Molekülteil "Z" eine Mehrfachbindung auf, wie dies beispielsweise bei den Polyethern und den Alkohol gestarteten Polyestern der Fall sein kann, in denen die endständige OH-Gruppe mit einer ungesättigten Säure wie (Meth)acrylsäure verestert wurde, erfolgt die Bindung über eine Michael-Addition der NH-Funktion an die Doppelbindung.

Beispiele für aminofunktionelle Polymere sind aminofunktionelle Polyaminosäuren wie Polylysin von Aldrich Chemical Co.; aminofunktionelle Silicone, welche unter dem Handelsnamen Tegomer® ASi 2122 von der Degussa AG; Polyamidoamine, welche unter dem Handelsnamen Polypox®, Aradur® oder "Starburst®" Dendrimere von Aldrich Chemical Co.; Polyallylamine und Poly(N-alkyl)allylamine welche unter den Handelsnamen PAA von Nitto Boseki; Polyvinylamine, welche unter dem Handelsnamen Lupamin® von BASF AG; Polyalkylenimine, wie zum Beispiel Polyethylenimine, welche unter den Handelsnamen Epomin® (Nippon Shokubai Co., Ltd.), Lupasol® (BASF AG); Polypropylenimine, welche unter dem Handelsnamen Astramol® von DSM AG, erhältlich sind. Weitere Beispiele an aminofunktionellen Polymeren stellen die o.g. Systeme durch Vernetzung mit aminreaktiven Gruppen dar. Diese Vernetzungsreaktion erfolgt beispielsweise über mehrfunktionelle Isocyanate, Carbonsäuren, (Meth)acrylate und Epoxiden. Weitere Beispiele sind Poly(meth)acrylatpolymere, die Dimethylaminopropyl(meth)-acrylamid (Degussa AG) oder Dimethylaminoethyl(meth)acrylat (Degussa AG) als Monomere beinhalten.

Typischerweise werden aminofunktionelle Polymere mit einem Molekulargewicht von 400 g/mol bis 600000 g/mol verwandt.

Beispiele für den Rest T sind Alkylreste mit 1 bis 24 Kohlenstoffatomen, wie der Methyl-, Ethyl-, Propyl-, iso-Propyl-, Butyl-, iso-Butyl-, tertiär-Butyl-, Hexyl-, isoHexyl-, Octyl-, Nonyl-, iso-Nonyl-, Decyl-, Dodecyl-, Hexadecyl- und Octadecylrest. Beispiele für gegebenenfalls substituierte Aryl- oder Arylalkylreste mit bis zu 24 Kohlenstoffatomen, sind der Phenyl-, Benzyl-, Toluyl- oder Phenethylrest.

Die Polyestergruppen -[O-A-C(O)]ₓ- und -[C(O)-A-O-]_{y}- enthalten durchschnittlich mehr als zwei Estergruppen und weisen ein mittleres Molekulargewicht Mₙ von 100 bis 5000 g/mol auf. Besonders bevorzugt ist ein Wert von Mₙ = 200 bis 2000 g/mol.

Eine besonders bevorzugte Ausführungsform der vorliegenden Erfindung ist dadurch gekennzeichnet, dass die Polyestergruppe durch an sich bekannte Verfahren durch ringöffnende Polymerisation mit einem Startermolekül wie T-CH₂-OH oder T-COOH und ein oder mehreren Lactonen, wie zum Beispiel β-Propiolacton, β-Butyrolacton, γ-Butyrolacton, 3,6-Dimethyl-1,4-dioxan-2,5-dion, δ-Valerolacton, γ-Valerolacton, ε-Caprolacton, γ-Caprolacton, 4-Methylcaprolacton, 2-Methylcaprolacton, 5-Hydroxydodecansäurelacton, 12-Hydroxydodecansäurelacton, 12-Hydroxy-9-octadecensäure, 12-Hydroxyoctadecansäure, erhalten wird. Startermoleküle wie T-COOH - sowie die daraus herstellbaren Fettalkohole T-CH₂-OH - sind vorzugsweise die auf diesem Gebiet bekannten und üblichen einbasischen Fettsäuren auf Basis natürlicher pflanzlicher oder tierischer Fette und Öle mit 6 bis 24 Kohlenstoffatomen, insbesondere mit 12 bis 18 Kohlenstoffatomen, wie Capronsäure, Caprylsäure, Caprinsäure, Laurinsäure, Myristinsäure, Palmitinsäure, Palmitoleinsäure, Isostearinsäure, Stearinsäure, Ölsäure, Linolsäure, Petroselinsäure, Elaidinsäure, Arachinsäure, Behensäure, Erucasäure, Gadoleinsäure, Rapsölfettsäure, Sojaölfettsäure, Sonnenblumenölfettsäure, Tallölfettsäure welche allein oder in Mischung in Form ihrer Glyceride, Methyl- oder Ethylester oder als freie Säuren eingesetzt werden können, sowie die bei der Druckspaltung anfallenden technischen Mischungen. Geeignet sind prinzipiell alle Fettsäuren mit ähnlicher Kettenverteilung.

Der Gehalt dieser Fettsäuren bzw. Fettsäureester an ungesättigten Anteilen, wird - soweit dies erforderlich ist - durch die bekannten katalytischen Hydrierverfahren auf eine gewünschte Jodzahl eingestellt oder durch Abmischung von vollhydrierten mit nichthydrierten Fettkomponenten erzielt.

Die Jodzahl, als Maßzahl für den durchschnittlichen Sättigungsgrad einer Fettsäure, ist die Jodmenge, welche von 100 g der Verbindung zur Absättigung der Doppelbindungen aufgenommen wird.

Sowohl die Fettsäuren als auch die resultierenden Alkohole können durch Anlagerung von Alkylenoxiden, insbesondere Ethylenoxid und/oder Styroloxid, modifiziert werden.

Beispiele für die Polyetherbausteine von B sind Alkylenoxide wie: Ethylenoxid, Propylenoxid, Butylenoxid, Styroloxid, Dodecenoxid, Tetradecenoxid, 2,3-Dimethyloxiran, Cyclopentenoxid, 1,2-Epoxypentan, 2-Isopropyloxiran, Glycidylmethylester, Glycidylisopropylester, Epichlorhydrin, 3-Methoxy-2,2-dimethyloxiran, 8-oxabicyclo[5.1.0]octan, 2-Pentyloxiran, 2-Methyl-3-phenyloxiran, 2,3-Epoxypropylbenzol, 2-(4-Fluorophenyl)oxiran, Tetrahydrofuran, sowie deren reine Enantiomerenpaare oder Enantiomerengemische.

Die Gruppe Z kann aus Additionsprodukten der Carbonsäureanhydriden wie z.B. Bernsteinsäureanhydrid, Maleinsäureanhydrid oder Phthalsäureanhydrid aufgebaut sein.

Das gewichtsmäßige Verhältnis von Polyester zu Polyether im erfindungsgemäßen Dispergierharz liegt zwischen 50 : 1 und 1 : 9, vorzugsweise zwischen 40 : 1 und 1 : 5 und besonders bevorzugt zwischen 30 : 1 und 1 : 1.

Weiterhin kann die erfindungsgemäße Paste ein Dispergiermittel enthalten, welches ein Organopolysiloxan der allgemeinen Formel **6** ist, 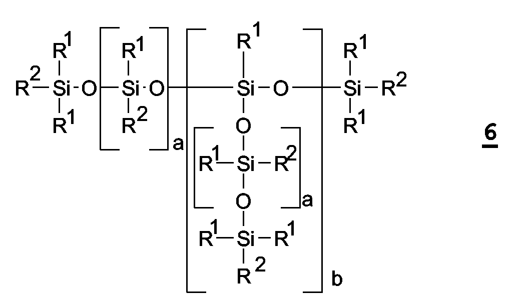 wobei die Reste
- R¹: Alkylreste mit 1 bis 4 Kohlenstoffatomen oder Arylreste sind, jedoch mindestens 80 % der Reste R¹ Methylreste sind,
- R²: im Molekül gleich oder verschieden sind und nachfolgende Bedeutungen haben können 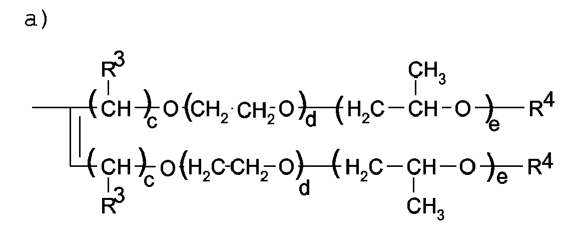
worin
R³ ein Wasserstoff- oder Alkylrest,
R⁴ ein Wasserstoff-, Alkyl- oder Carboxylrest,
c eine Zahl von 1 bis 20,
d eine Zahl von 0 bis 50, e eine Zahl von 0 bis 50 ist, oder
b) -(CH₂-)_{f}OR⁵,
worin,
R⁵ ein Wasserstoff-, Alkyl-, Carboxyl- oder ein gegebenenfalls Ethergruppen enthaltender Dimethylolpropanrest,
f eine Zahl von 2 bis 20 ist
oder
c) - (CH₂-)g(OC₂H₄-)ₕ(OC₃H₆-)ᵢ(OC₄H₈)ⱼ(OCH₂ CH(C₆H₅)) ₖOR⁶ worin
R⁶ ein Wasserstoff-, Alkyl- oder Carboxylrest,
g eine Zahl von 2 bis 6,
h eine Zahl von 0 bis 20,
i eine Zahl von 1 bis 50,
j eine Zahl von 0 bis 10,
k eine Zahl von 0 bis 10 ist
oder
d) dem Rest R¹ entspricht, mit der Maßgabe, dass im durchschnittlichen Molekül mindestens ein Rest R² die Bedeutung (a) hat, wobei a eine Zahl von 1 bis 500, vorzugsweise 1 bis 200 und insbesondere 1 bis 50 und b eine Zahl von 0 bis 10, vorzugsweise < 5 und insbesondere 0 ist.

Vorzugsweise können R¹ Methylreste, a = 1-50 und b=0 sein. Vorzugsweise kann R³ Wasserstoff sein. Vorzugsweise kann R⁴ Wasserstoff oder ein Acrylrest sein. Vorzugsweise kann der Index c = 1 oder 2 sein und d und e unabhängig voneinander 0 bis 10 sein.

Solche Dispergiermittel sind beispielsweise in EP-A-1382632 beschrieben.

Weiterhin kann die erfindungsgemäße Paste als Dispergiermittel ein Copolymeres auf Basis von styrenoxidbasierten Oxyalkylenglykol- oder Polyalkylenoxid-Alkenylethern und ungesättigten Carbonsäure, vorzugsweise Dicarbonsäure-Derivaten enthalten, mit
a) 1 bis 80 mol-% mindestens einer der Baugruppen der Formel **7a, 7b, 7c** und/oder **7d** 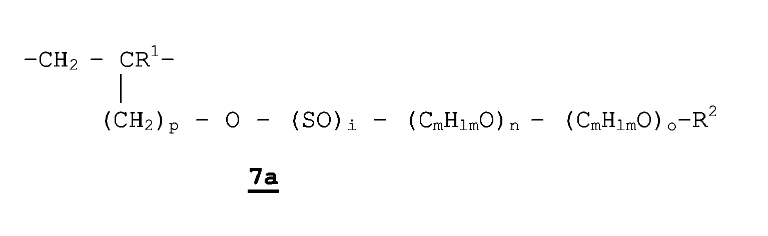 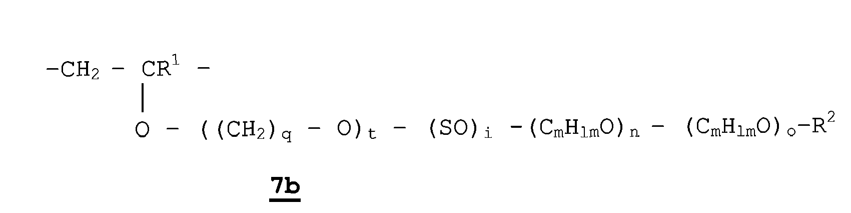 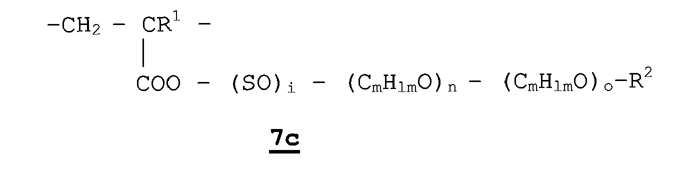 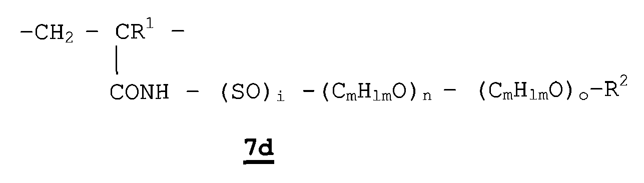 worin
   R¹ = H, aliphatischer Kohlenwasserstoffrest mit 1 bis 5 C-Atomen,
   p=1-4, q=0-6, t=0-4, i=1-6, l=1-2, m = 2-18 sind,
   wobei der Index am H-Atom durch das Produkt aus l und m gebildet wird,
   n=0-100, o=0-100, SO = Styrenoxid,
   wobei (SO)ᵢ und die Alkylenoxidderivate statistisch oder blockartig im Polyether verteilt sein können, bevorzugterweise liegen die Gruppen aber blockartig aufgebaut und in der Reihenfolge

   - (SO)ᵢ - (CₘHₗₘO)ₙ-(CₘHₗₘO)ₒ] - R² vor.

   R² = H, ein aliphatischer, gegebenenfalls verzweigter Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen, der gegebenenfalls substituiert ist oder ein Phosphorsäureester-, (vorzugsweise Monoester), Sulfat- oder Sulfonatderivat sein kann.
b) 1 bis 90 mol-% Baugruppen der Formel **8** 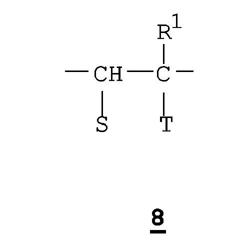 wobei
   S = -H, ―COOMₐ, -COOR³ bedeutet,
   M = Wasserstoff, ein- oder zweiwertiges
   Metallkation, Ammoniumion, organischer Aminrest,
   a = 1 oder für den Fall, dass M ein zweiwertiges Metallkation ½ ist,
   R³ = ein aliphatischer, gegebenenfalls verzweigter Kohlenwasserstoffrest mit 1 bis 20 C-Atomen, ein cycloaliphatischer Kohlenwasserstoff mit 5 bis
   8 C-Atomen, ein Arylrest mit 6 bis 14 C-Atomen ist,
   T = -U¹-R⁴ oder -U¹-(CₘHₗₘO)ₙ-(CₘHₗₘO)ₒ-R²,
   U¹ = -COO-, -CONH-, -CONR³-, -O-, -CH₂O-,
   R⁴ =H, Mₐ, R³ oder -Q¹-NQ²Q³ ist,
   wobei
   Q¹ ein zweiwertiger Alkylenrest mit 2 bis 24 Kohlenstoffatomen,
   Q² und Q³ - aliphatische und/oder alicyclische Alkylreste mit 1 bis 12 Kohlenstoffatomen sind, gegebenenfalls oxidiert zu

   -Q¹-N⁽⁺⁾O(-)Q²Q³

   und
   m, n, l, o, R¹ und R² die oben genannte Bedeutung aufweisen,
c) 0 bis 10 mol-% Baugruppen der Formel **9** 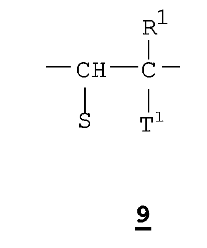 wobei
   T¹ = -U¹-(CₘHₗₘO)ₙ-(CₘHₗₘO)ₒ-R⁵ bedeutet, 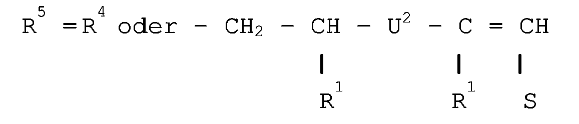 wobei U² = -OOC -, -NHOC-, -O-, -O-CH₂- ist,
   wobei m, n, l, o, S, R¹, R² und U¹ die oben genannte Bedeutung aufweisen.

Solche Dispergiermittel sind beispielsweise in DE-A-10348825 beschrieben.

Bevorzugt kann die erfindungsgemäße Paste aus einer festen Phase aus wenigstens einem nanoskaligen Pulver und einer flüssigen Phase aus wenigstens einem Dipsergiermittel bestehen.

Weiterhin kann eine erfindungsgemäße Paste bevorzugt sein, bei der die feste Phase aus einem nanoskaligen Pulver und die flüssige Phase aus einem Dispergiermittel besteht.

Ein weiterer Gegenstand der Erfindung ist ein Verfahren zur Herstellung der erfindungsgemäßen Paste bei dem das nanoskalige Pulver auf einmal, kontinuierlich oder portionsweise unter dispergierenden Bedingungen in die flüssige Phase eingearbeitet wird. Die Dispergierung kann beispielsweise mit Mörser, Walzenstuhl, Kugelmühle, Rotor-Stator, Planetenkneter oder mit anderen dem Fachmann bekannten Dispergieraggregaten erfolgen.

Ein weiterer Gegenstand der Erfindung ist eine Dispersion erhältlich aus der erfindungsgemäßen Paste und einem Lösungsmittel sein. Das Lösungsmittel kann Wasser, ein oder mehrere polare, organische Lösungsmittel und/oder eine oder mehrere unpolare, organische Lösungsmittel sein.

Bevorzugterweise beträgt der Gehalt an nanoskaligem Pulver 0,5 bis 50 Gew.-%, bezogen auf die Dispersion.

Ein weiterer Gegenstand der Erfindung ist ein Verfahren zur Herstellung der erfindungsgemäßen Dispersion bei der die Paste durch Rühren oder durch Schütteln mit einem Lösungsmittel oder Lösungsmittelgemisch vermengt wird.

Ein weiterer Gegenstand der Erfindung ist die Verwendung der erfindungsgemäßen Paste zur Herstellung von Lacken, (Druck)Farben, Beschichtungen, Klebstoffen und Formteilen.

### Beispiele

### Analytik

Der VOC-Gehalt wird nach DIN EN ISO 11890-1 bestimmt. Die Berechnung des VOC-Gehaltes erfolgt abzüglich Wasser gemäß Verfahren 8.4. Der Wasser-Gehalt wird titrimetrisch nach Karl Fischer (ISO 760) bestimmt.

### Partikelgrößenbestimmung mittels PCS:

Die Partikelgrößenbestimmung erfolgt mittels dynamische Lichtstreuung in einer 1 prozentigen Dispersion. Die Dispergierung erfolgt durch Rühren, Schütteln oder Ultraschall. Als Partikelgrößenanalysator dient das Gerät HORIBA LB-500. Zur genauen Bestimmung der Teilchengrößenverteilung müssen Temperatur, Viskosität und Brechungsindex von Teilchen und Dispersionsmedium bekannt sein.

Feststoffgehaltsbestimmung der Paste: Es werden ungefähr 0,2 - 0,3 g der Paste in ein tariertes Glas eingewogen. Das genaue Gewicht der Einwaage mit Glas wird notiert und das Glas mit der Paste für 1 Stunde bei 400°C im Carbolite-Ofen geglüht. Nach Abkühlung des Glases mit dem Pastenrest wird dieses nochmals ausgewogen. Die Auswaage wird durch die Einwaage dividiert und mal 100 genommen, so erhält man den Feststoffgehalt der Paste in Prozent.
Zur Bestimmung wird der Gehalt an verschiedenen Stellen einer Paste bestimmt.

### Pulver

Zinkoxid (gemäß WO2005/028565): Zinkpulver (510 g/h) wird mittels eines Stickstoffstromes (4,2 Nm³/h) in eine reduktive Verdampfungszone überführt, wo eine Wasserstoff/Luftflamme (Wasserstoff: 4,0 Nm³/h, Luft: 8,0 Nm³/h) brennt. Dabei wird das Zinkpulver verdampft. Das Reaktionsgemisch aus Zink-Dampf, Wasserstoff, Stickstoff und Wasser strömt in die Oxidationszone, in der 20 Nm³/h Luft zugegeben wird.
Die Temperatur vor Zugabe der Oxidationsluft beträgt 956°C. Anschließend werden und 10 Nm³/h Quenchluft zugegeben. Die Temperatur vor Zugabe der Quenchluft beträgt 648°C. Das erhaltene Zinkoxidpulver wird durch Filtration vom Gasstrom abgetrennt.
Die BET-Oberfläche des Zinkoxidpulvers beträgt 27 m²/g.

Indiumzinnoxid gemäß WO00/14017: 140 g Indium(+III)chlorid (0,63 mol wasserfrei), 18 g Zinn(+IV)chlorid x 5 H2O und 5,6 g Caprolactam werden in 1400 ml Wasser gegeben und gerührt. Nachdem eine klare Lösung entstanden ist, wird diese auf 50°C erwärmt und nachfolgend 105 ml 25 prozentige Ammoniumhydroxidlösung zugetropft. Die Dispersion wird bei einer Temperatur von 50°C 24 Stunden gerührt. Anschließend werden weitere 280 ml Ammoniumhydroxidlösung hinzugefügt. Der weisse Niederschlag wird abzentrifugiert im Vakuumtrockenschrank bei 190°C so lange getrocknet, bis eine leichte Gelbfärbung des Pulvers festzustellen ist.
Der getrocknete Niederschlag wird fein gemörsert und in einen Formiergas-Ofen gestellt. Der Ofen wird evakuiert, dann mit Stickstoff geflutet. Der Ofen wird mit einer Heizrate von 250°C/Stunde auf 250°C aufgeheizt bei einem Stickstofffluss von 200 Liter/Stunde. Diese Temperatur wird für 60 Minuten unter Formiergasatmosphäre bei einem Gasfluss von 300 Liter/Stunde gehalten. Danach kühlt der Ofen unter Stickstoffatmosphäre bis auf Raumtemperatur ab (Dauer: ca. 5 Stunden). Hieraus resultiert ein dunkelblaues Pulver.

Das so hergestellte Indiumzinnoxidpulver wird in den Beispielen ITO-1 bis ITO-12 eingesetzt.

Indiumzinnoxid gemäß DE-A-10311645: Eine wässerige Lösung enthaltend 88,9 g/l Indium(III)chlorid und 8,4 g/l Zinn(IV)chlorid werden mittels Druckluft und einer Düse (Durchmesser 0,8 mm) mit einer Förderrate von 1500 ml/h in das Reaktionsrohr zerstäubt. Hier brennt eine Knallgasflamme aus 5 m³/h Wasserstoff und 15 m³/h Luft. Die Temperatur 0,5 m unterhalb der Flamme beträgt 750°C. 2,5 m unterhalb der Flamme werden 10 m³/h Formiergas zugeführt, die Temperatur beträgt oberhalb der Zugabestelle ca. 450°C. Das Reaktionsgemisch durchläuft eine Verweilzeitstrecke von 2 m Länge in 14 sec.. Anschließend wird der Feststoff mittels eines Filters von den gasförmigen Stoffen abgetrennt und über einen Zeitraum von 15 Minuten bei einer Temperatur von 250°C unter fortdauernder Zuführung von Formiergas behandelt.
Das Verhältnis In₂O₃/SnO₂ beträgt 94/6, die BET-Oberfläche 53 m²/g.

Das so hergestellte Indiumzinnoxidpulver wird in den Beispielen ITO-13 und ITO-14 eingesetzt.

### Dispergiermittel

Als Dispergiermittel werden eingesetzt: LA-D 1045, Dispers 650, Twin 4000, Dispers 650-carboxy, Dispers 655, LA-D 868, LA-D 869. Alle TEGO, alle VOC < 10 g/l.

### Herstellung der Pasten

1. Mit einem Mörser: Die hergestellten Zinkoxid und Indiumzinnoxid-Pulver und Dispergiermittel werden in einem Mörser gegeben und mit dem Stößel für ca. 10 - 15 min vermengt.
2. Mit einem Dreiwalzwerk der Firma Exakt, Typ Exakt 80 E. Das Walzwerk besteht aus 3 Walzen, welche sich gegenläufig drehen. Die mittlere und hintere Walze drehen sich zueinander, während sich die vordere Walze entgegengesetzt zur mittleren dreht. Auf den hinteren Walzen werden 92,82 g Zinkoxid und 7,18 g Twin 4000 eingetragen (Beispiel ZnO-6). Zur Einstellung der Walzzone werden am hinteren Spalt Begrenzungsbacken in die vorgesehenen Halterstäbe eingebracht. Optimal sind die Begrenzungsbacken justiert, wenn sie bis zur Markierung in die Halterung geschoben worden sind. Wird mehr Material verarbeitet, können sie auch weiter in die Halterung geschoben werden. Mit Hilfe der vorderen Walze wird das Material von der mittleren Walze abgenommen, nochmals geschert und auf das Abnahmemesser überführt.

### Herstellung der Dispersionen

Die erfindungsgemäße Paste wird mit einem Lösungsmittel durch Rühren mit einem Magnetrührer (10 min bei höchster Stufe), durch Schütteln oder durch Ultraschall vermengt.

Mit den erfindungsgemäßen Pasten aus den Beispielen ZnO-1, ZnO-7, ZnO-8, ITO-1, ITO-5, ITO-7 und ITO-9 können Dispersionen mit unpolaren und polaren organischen Lösungsmitteln hergestellt werden.

Mit den erfindungsgemäßen Pasten aus den Beispielen ZnO-2, ZnO-4, ZnO-6 und ITO-3 können Dispersionen mit Wasser und polaren organischen Lösungsmitteln hergestellt werden.

Mit der erfindungsgemäßen Paste aus Beispiel ITO-2 kann eine Dispersion mit Wasser, polaren und unpolaren organischen Lösungsmitteln hergestellt werden.

Die Paste gemäß der vorliegenden Erfindung weist die folgenden vorteile auf:
- Sie weist einen sehr niedrigen VOC-Gehalt auf.
- Die Zugabe eines Lösungsmittels führt zu einer stabilen Dispersion (keine Reagglomeration).
- Ausgehend von einer Paste können sowohl polare wie auch unpolare, wässerige oder organischen Dispersionen erhalten werden.
- Ausgehend von einer Paste können die Dispersionen durch einfaches Rühren, Schütteln oder durch Ultraschall erhalten werden.

**Tabelle 1: Erfindungsgemäße Zinkoxidpasten**

| **ZnO-** | **Gehalt Pulver** | **Dispergiermittel** | **Gehalt Dispergiermittel** | **Gehalt Wasser Paste** |
|---|---|---|---|---|
| | Gew.-% | | Gew.-% | Gew.-% |
| 1 | 62,81 | LA-D 1045 | 35,90 | 1,25 |
| 2 | 92,4 | LA-D 1045 | 6,11 | 1,41 |
| 3 | 61,07 | Dispers 650 | 37,72 | 1,13 |
| 4 | 91,28 | Dispers 650 | 7,09 | 1,51 |
| 5 | 71,98 | Twin 4000 | 26,68 | 1,22 |
| 6 | 92,82 | Twin 4000 | 5,66 | 1,44 |
| 7 | 64,59 | Dispers 650-carboxy | 34,01 | 1,3 |
| 8 | 92,56 | Dispers 650-carboxy | 6,01 | 1,38 |
| 9 | 69,5 | Dispers 655 | 29,05 | 1,35 |
| 10 | 91,21 | Dispers 655 | 7,28 | 1,45 |
| 11 | 70,73 | LA-D 869 | 27,93 | 1,25 |
| 12 | 89,52 | LA-D 869 | 9,01 | 1,35 |

**Tabelle 2: D₅₀-Werte [nm] von Dispersionen¹⁾ ausgehend von den erfindungsgemäßen Zinkoxidpasten**

| **ZnO-** | **1** | **2** | **3** | **4** | **5** | **6** | **7** | **8** | **9** | **10** | **11** | **12** |
|---|---|---|---|---|---|---|---|---|---|---|---|---|
| Ethylen-glykol²⁾ | | | | | | 109 | | | 240 | 145 | | |
| Phenoxy-propanol²⁾ | 122 | | | | | | 136 | | 180 | 140 | 176 | 155 |
| Isopropoxy-ethanol²⁾ | | | | | | | 332 | 164 | | | | |
| n-Butyl-acetat²⁾ | 181 | 261 | | | 212 | 331 | 168 | 188 | | | | |
| Wasser²⁾ | | 244 | | 280 | | | | 348 | | | | |
| Phenoxy-propanol³⁾ | | | <200 | | | | | | 160 | 130 | 153 | 146 |
| Wasser³⁾ | | | <200 | | 248 | 204 | | | | | | |

| | | | | | | | | | | | | |
|---|---|---|---|---|---|---|---|---|---|---|---|---|
| 1) Feststoffgehalt Dispersion: 1 Gew.-%; 2)hergestellt mit Mörser; 3) hergestellt mit Walze | | | | | | | | | | | | |

**Tabelle 3: Erfindungsgemäße Indiumzinnoxidpasten**

| **ITO-** | **Gehalt Pulver** | **Dispergiermittel** | **Gehalt Dispergiermittel** | **Gehalt Wasser Paste** |
|---|---|---|---|---|
| | Gew.-% | | Gew.-% | Gew.-% |
| 1 | 61,93 | LA-D 1045 | 36,99 | 1,04 |
| 2 | 90,37 | LA-D 1045 | 8,39 | 1,21 |
| 3 | 65,42 | Dispers 650 | 33,42 | 1,09 |
| 4 | 89,68 | Dispers 650 | 9,15 | 1,14 |
| 5 | 70,31 | LA-D 868 | 28,50 | 1,14 |
| 6 | 64,12 | LA-D 868 | 34,72 | 1,12 |
| 7 | 62,83 | Dispers 650-carboxy | 36,10 | 1,04 |
| 8 | 89,10 | Dispers 650-carboxy | 9,69 | 1,18 |
| 9 | 89,81 | LA-D 869 | 8,92 | 1,22 |
| 10 | 84,12 | LA-D 869 | 14,60 | 1,18 |
| 11 | 74,56 | Twin 4000 | 24,39 | 1,01 |
| 12 | 84,12 | Twin 4000 | 14,72 | 1,12 |
| 13 | 60,80 | LA-D 1045 | 38,12 | 1,07 |
| 14 | 86,30 | LA-D 1045 | 12,51 | 1,13 |

**Tabelle 4: D₅₀-Werte [nm] von Dispersionen¹⁾ ausgehend von den erfindungsgemäßen Indiumzinnoxid-Pasten**

| **ITO-** | **1** | **2** | **3** | **4** | **5** | **6** | **7** | **8** | **9** | **10** | **11** | **12** | **13** | **14** |
|---|---|---|---|---|---|---|---|---|---|---|---|---|---|---|
| Ethylenglykol | | | | | | | | | 351 | | | | | |
| Methoxypropanol | | | 281 | | 257 | | 814 | | | | | | | |
| Phenoxypropanol | 82 | 61 | 80 | 120 | 84 | 110 | 79 | 122 | 87 | 98 | 266 | 295 | 120 | 115 |
| n-Butylacetat | 127 | 106 | | 168 | 126 | 150 | 118 | 181 | 162 | 190 | 173 | 210 | 160 | |
| Wasser | | 91 | 109 | 201 | 257 | 293 | | | | | | | | |

| | | | | | | | | | | | | | | |
|---|---|---|---|---|---|---|---|---|---|---|---|---|---|---|
| 1) Feststoffgehalt Dispersion: 1 Gew.-%; hergestellt mit Mörser | | | | | | | | | | | | | | |

## Patentansprüche

1. Paste, enthaltend als feste Phase wenigstens ein nanoskaliges Pulver und als flüssige Phase wenigstens ein Dispergiermittel, **dadurch gekennzeichnet, dass**
- der Anteil des nanoskaligen Pulvers 30 bis 95 Gew.-% und der Anteil der flüssigen Phase wenigstens 5 Gew.-% ist, jeweils bezogen auf die Gesamtmenge der Paste,
- die Paste einen Wassergehalt von weniger als 3 Gew.-% Wasser aufweist und
- die flüssige Phase einen VOC-Gehalt von weniger als 10 g/l aufweist.

2. Paste nach den Anspruch 1, **dadurch gekennzeichnet, dass** die flüssige Phase einen VOC-Gehalt von weniger als 1 g/l aufweist.

3. Paste nach den Ansprüchen 1 oder 2, **dadurch gekennzeichnet, dass** die flüssige Phase einen Gehalt an Wasser von weniger als 0,1 Gew.-% aufweist.

4. Paste nach den Ansprüchen 1 bis 3, **dadurch gekennzeichnet, dass** das nanoskalige Pulver bis zu 3 Gew.-%, bezogen auf die Paste, gemäß Gleichgewichtseinstellung partikelgebundenes Wasser enthält.

5. Paste nach den Ansprüchen 1 bis 4, **dadurch gekennzeichnet, dass** der Anteil des nanoskaligen Pulvers, bezogen auf die Gesamtmenge der Paste, 60 bis 90 Gew.-% ist.

6. Paste nach den Ansprüchen 1 bis 5, **dadurch gekennzeichnet, dass** das nanoskalige Pulver gleichmäßig in der Paste verteilt ist.

7. Paste nach den Ansprüchen 1 bis 6, **dadurch gekennzeichnet, dass** der mittlere Durchmesser der nanoskaligen Partikel kleiner als 300 nm ist.

8. Paste nach den Ansprüchen 1 bis 7, **dadurch gekennzeichnet, dass** das nanoskalige Pulver ein Metall, ein Metalloxid, ein Metallborid, ein Metallcarbid, ein Metallcarbonat, ein Metallnitrid, ein Metallphosphat, ein Metallchalkogenid, ein Metallsulfat und/oder ein Metallhalogenid ist.

9. Paste nach Anspruch 8, **dadurch gekennzeichnet, dass** das Metalloxid die Elemente Si, Al, Ti, Fe, Ce, In, Sb, Sn, Zn, Y und/oder Zr enthält.

10. Paste nach den Ansprüchen 1 bis 9, **dadurch gekennzeichnet, dass** sie durch Adsorption, Reaktion an der Oberfläche oder Komplexierung von beziehungsweise mit anorganischen und/oder organischen Reagentien modifiziert ist.

11. Paste nach den Ansprüchen 1 bis 10, **dadurch gekennzeichnet, dass** das Dispergiermittel ein styrenoxidbasiertes Polyalkylenoxid mit statistischer Verteilung oder als Blockcopolymer der allgemeinen Formel **1** ist,
R¹O(SO)ₐ(EO)_{b}(PO)_{c}(BO)_{d}R² (**1**),
wobei
R¹ = ein geradkettiger oder verzweigter oder cycloaliphatischer Rest mit 8 bis 13 Kohlenstoffatomen,
R² = Wasserstoff, ein Acylrest, Alkylrest oder Carbonsäurerest mit jeweils 1 bis 8 C-Atomen,
SO = Styrenoxid, EO = Ethylenoxid, PO = Propylenoxid, BO = Butylenoxid und
a = 1 bis 5, b = 3 bis 50, c = 0 bis 3, d = 0 bis 3 sind, wobei b ≥ a+c+d ist.

12. Paste nach den Ansprüchen 1 bis 11, **dadurch gekennzeichnet, dass** das Dispergiermittel ein Phosphorsäureester der allgemeinen Formel **2,** 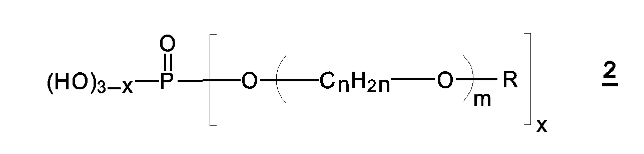 ist, mit R = 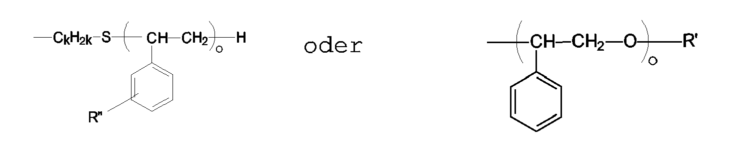 wobei
x gleich 1 oder 2,
n eine Zahl von 2 bis 18,
m und o eine Zahl von 2 bis 100,
k eine Zahl von 2 bis 4,
R" H oder ein linearer oder verzweigter Alkylrest, der gegebenenfalls mit zusätzlichen funktionellen Gruppen substituiert sein kann, und
R' einen Alkyl-, Alkaryl-, Alkenyl- oder Sulfopropylrest ist.

13. Paste nach den Ansprüchen 1 bis 12, **dadurch gekennzeichnet, dass** das Dispergiermittel erhältlich ist durch die teilweise oder vollständige Umsetzung von
A) einem oder mehreren aminofunktionellen Polymeren mit
B) einem oder mehreren Polyestern der allgemeinen Formeln (**3**)/(**3a**)
T-C(O)-[O-A-C(O)]ₓ-OH (**3**),
T-O-[C(O)-A-O-]_{y}-Z ((**3a)**
und
C) einem oder mehreren Polyethern der allgemeinen Formel (**4**)/(**4a**)
T-C(O)-B-Z (**4**),
T-O-B-Z (**4a**),
worin
T ein Wasserstoffrest und/oder ein gegebenenfalls substituierter, linearer oder verzweigter Aryl-, Arylalkyl-, Alkyl- oder Alkenylrest mit 1 bis 24 Kohlenstoffatomen ist,
A mindestens ein zweiwertiger Rest ist, ausgesucht aus der Gruppe der linearen, verzweigten, cyclischen und aromatischen Kohlenwasserstoffe,
Z mindestens ein Rest ist, ausgesucht aus der Gruppe der Sulfonsäuren, Schwefelsäuren, Phosphonsäuren, Phosphorsäuren, Carbonsäuren, Isocyanate, Epoxide, insbesondere der Phosphorsäure und (Meth)acrylsäure,
B ein Rest der allgemeinen Formel (**5**) ist
-(C₁H₂₁O)ₐ-(CₘH₂ₘO)_{b}-(CₙH₂ₙO)_{c}-(SO)_{d}- (**5**)
a,b,c unabhängig voneinander Werte von 0 bis 100 sind, mit der Maßgabe, dass die Summe aus a + b + c ≥ 0, vorzugsweise 5 bis 35, insbesondere 10 bis 20 ist, mit der Maßgabe, dass die Summe aus a + b + c + d > 0,
d≥ 0, vorzugsweise 1 bis 5 ist,
l,m,n unabhängig voneinander ≥ 2, vorzugsweise 2 bis 4 ist,
x,y unabhängig voneinander ≥ 2 sind.

14. Paste nach den Ansprüchen 1 bis 13, **dadurch gekennzeichnet, dass** das Dispergiermittel ein Organopolysiloxan der allgemeinen Formel **6** 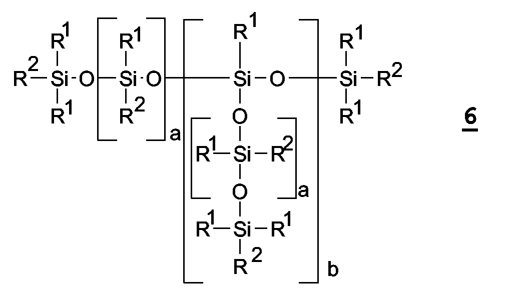 wobei die Reste
R¹ Alkylreste mit 1 bis 4 Kohlenstoffatomen oder Arylreste sind, jedoch mindestens 80 % der Reste R¹ Methylreste sind,
R² im Molekül gleich oder verschieden sind und nachfolgende Bedeutungen haben können 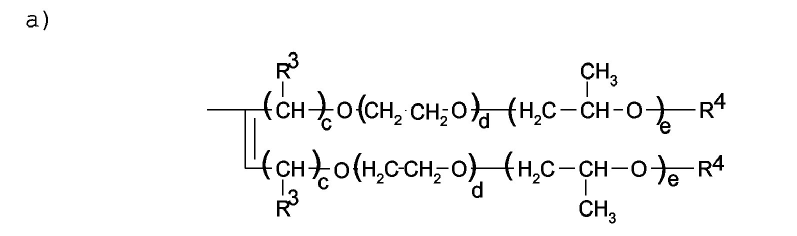
worin
R³ ein Wasserstoff- oder Alkylrest,
R⁴ ein Wasserstoff-, Alkyl- oder Carboxylrest,
c eine Zahl von 1 bis 20,
d eine Zahl von 0 bis 50, e eine Zahl von 0 bis 50 ist, oder
b) - (CH₂-)_{f}OR⁵,
worin,
R⁵ ein Wasserstoff-, Alkyl-, Carboxyl- oder ein gegebenenfalls Ethergruppen enthaltender Dimethylolpropanrest,
f eine Zahl von 2 bis 20 ist
oder
c) -(CH₂-) _{g} (OC₂H₄-) ₕ (OC₃H₆-) ᵢ (OC₄H₈) ⱼ (OCH₂ CH (C₆H₅) ₖOR⁶
worin
R⁶ ein Wasserstoff-, Alkyl- oder Carboxylrest,
g eine Zahl von 2 bis 6,
h eine Zahl von 0 bis 20,
i eine Zahl von 1 bis 50,
j eine Zahl von 0 bis 10,
k eine Zahl von 0 bis 10 ist
oder
(d) dem Rest R¹ entspricht, mit der Maßgabe, dass im durchschnittlichen Molekül mindestens ein Rest R² die Bedeutung (a) hat, wobei a eine Zahl von 1 bis 500, vorzugsweise 1 bis 200 und insbesondere 1 bis 50 und b eine Zahl von 0 bis 10, vorzugsweise < 5 und insbesondere 0 ist.

15. Paste nach den Ansprüchen 1 bis 14, **dadurch gekennzeichnet, dass** das Dispergiermittel ein Copolymeres auf Basis von styrenoxidbasierten Oxyalkylenglykol- oder Polyalkylenoxid-Alkenylethern und ungesättigten Carbonsäure,vorzugsweise Dicarbonsäure-Derivaten, ist mit
A) 1 bis 80 mol-% mindestens einer der Baugruppen der Formel **7a, 7b, 7c** und/oder **7d** 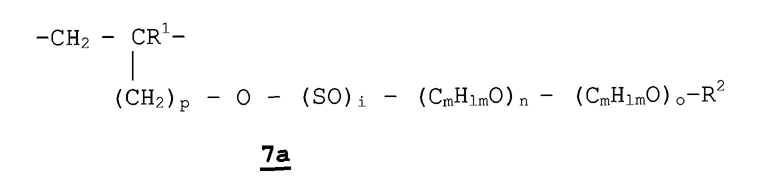 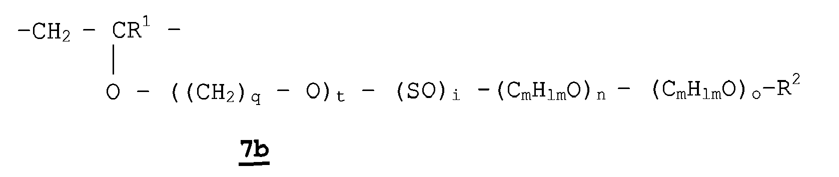 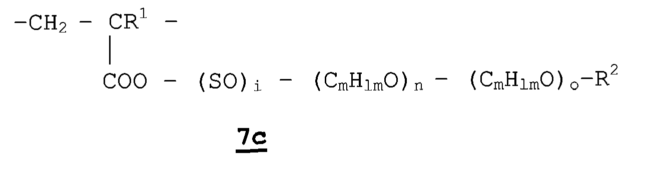 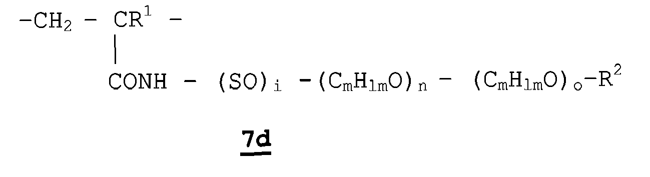 worin
R¹ = H, aliphatischer Kohlenwasserstoffrest mit 1 bis 5 C-Atomen,
p=1-4, q=0-6, t=0-4, i=1-6, 1=1-2, m = 2-18 sind,
wobei der Index am H-Atom durch das Produkt aus 1 und m gebildet wird,
n=0-100, o=0-100, SO = Styrenoxid,
wobei (SO)ᵢ und die Alkylenoxidderivate statistisch oder blockartig im Polyether verteilt sein können, bevorzugterweise liegen die Gruppen aber blockartig aufgebaut und in der Reihenfolge
- (SO)ᵢ - [(CₘHₗₘO)ₙ-(CₘHₗₘO)ₒ] - R² vor.
R² = H, ein aliphatischer, gegebenenfalls verzweigter Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen, der gegebenenfalls substituiert ist oder ein Phosphorsäureester-, (vorzugsweise Monoester), Sulfat- oder Sulfonatderivat sein kann.
B) 1 bis 90 mol-% Baugruppen der Formel **8** 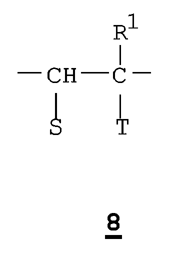 wobei
S = -H, -COOMₐ, -COOR³ bedeutet,
M = Wasserstoff, ein- oder zweiwertiges Metallkation, Ammoniumion, organischer Aminrest,
a = 1 oder für den Fall, dass M ein zweiwertiges Metallkation ½ ist,
R³ = ein aliphatischer, gegebenenfalls verzweigter Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen ist,
T = -U¹-R⁴ oder -U¹-(CₘHₗₘO)ₙ-(CₘHₗₘO)ₒ-R²,
U¹ =-COO-, -CONH-, -CONR³-, -O-, -CH₂O-,
R⁴ =H, Mₐ, R³ oder -Q¹-NQ²Q³ ist,
wobei
Q¹ ein zweiwertiger Alkylenrest mit 2 bis 24 Kohlenstoffatomen,
Q² und Q³ - aliphatische und/oder alicyclische Alkylreste mit 1 bis 12 Kohlenstoffatomen sind, gegebenenfalls oxidiert zu
-Q¹-N⁽⁺⁾O(-) Q²Q³
und
m, n, l, o, R¹ und R² die oben genannte Bedeutung aufweisen,
C) 0 bis 10 mol-% Baugruppen der Formel **9** 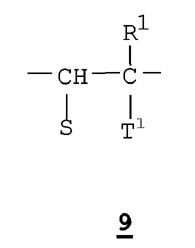 wobei
T¹ =-U¹-(CₘHₗₘO)ₙ-(CₘHₗₘO)ₒ-R⁵ bedeutet, 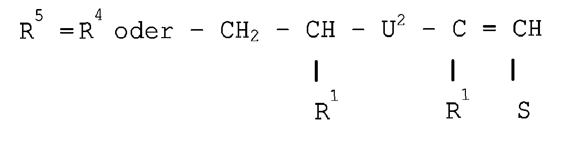 wobei U² = -OOC -, -NHOC-, -O-, -O-CH₂- ist,
wobei m, n, l, o, S, R¹, R² und U¹ die oben genannte Bedeutung aufweisen.

16. Paste nach den Ansprüchen 1 bis 15, **dadurch gekennzeichnet, dass** die feste Phase aus wenigstens einem nanoskaligen Pulver und die flüssige Phase aus wenigstens einem Dipsergiermittel besteht.

17. Paste nach den Ansprüchen 1 bis 16, **dadurch gekennzeichnet, dass** die feste Phase aus einem nanoskaligen Pulver und die flüssige Phase aus einem Dispergiermittel besteht.

18. Verfahren zur Herstellung der Paste gemäß der Ansprüche 1 bis 17, **dadurch gekennzeichnet, dass** das nanoskalige Pulver auf einmal, kontinuierlich oder portionsweise unter dispergierenden Bedingungen in die flüssige Phase eingearbeitet wird.

19. Dispersion, erhältlich aus der Paste gemäß der Ansprüche 1 bis 18 und einem oder mehreren Lösungsmitteln.

20. Dispersion nach Anspruch 19, **dadurch gekennzeichnet, dass** der Gehalt an nanoskaligem Pulver 0,5 bis 50 Gew.-%, bezogen auf die Dispersion, beträgt.

21. Verfahren zur Herstellung der Dispersion gemäß der Ansprüche 19 oder 20, **dadurch gekennzeichnet, dass** die Paste durch Rühren oder durch Schütteln mit einem Lösungsmittel oder Lösungsmittelgemisch vermengt wird.

22. Verwendung der Paste gemäß der Ansprüche 1 bis 17 zur Herstellung von Lacken, (Druck)Farben, Beschichtungen, Klebstoffen und Formteilen.
